# FASCICULE DE BREVET EUROPEEN

(11) **EP 1 368 282 B1**
(45) Date de publication et mention de la délivrance du brevet: **22.08.2007**
(21) Numéro de dépôt: 02713013.7
(22) Date de dépôt: 05.03.2002
(51) Int. Cl.: C04B 24/16, C04B 28/14, C04B 28/10

(54) **PROCEDE D'ALLEGEMENT DE PLAQUES DE PLATRE**
VERFAHREN ZUR GEWICHTSVERMINDERUNG VON GIPSBAUPLATTEN
METHOD FOR PRODUCING REDUCED-WEIGHT PLASTERBOARDS

(30) Priorité: 06.03.2001 FR 0103020
(43) Date de publication de la demande: 10.12.2003
(73) Titulaire: LAFARGE PLATRES, 84915 Avignon Cedex (FR)
(72) Inventeur: MARTIN, Daniel, F-69002 Lyon (FR); GARCIN, Robert, F-38080 L'Isle d'Abeau (FR)
(74) Mandataire: Hirsch & Associés
(86) Numéro de dépôt international: PCT/FR2002/000786
(87) Numéro de publication internationale: WO 2002/070427

(56) Documents cités:
- WO-A-00/06518
- WO-A-95/16515
- WO-A-99/08978
- US-A- 5 240 639
- US-A- 5 643 510
- US-A- 5 714 001

## Description

La présente invention concerne un procédé pour la fabrication de plaques de plâtre allégées.

Une plaque de plâtre est un élément parallélépipédique préfabriqué en plâtre (sulfate de calcium dihydraté) recouvert par un carton ou un papier ou encore des fibres minérales sur chacune de ses faces. Le composite ainsi formé présente de bonnes propriétés mécaniques, les feuilles sur les faces servant à la fois d'armature et de parement.

L'âme de plâtre est obtenue à partir d'une pâte de plâtre formée principalement par mélange de sulfate de calcium hydratable et d'eau, additionnée le cas échéant d'adjuvants habituels. Par « sulfate de calcium hydratable », il faut entendre, dans le présent exposé, un sulfate de calcium anhydre (anhydrite II ou III) ou un sulfate de calcium semi-hydraté (CaSO₄·½H₂O) sous sa forme cristalline α ou β. De tels composés sont bien connus de l'homme du métier et sont généralement obtenus par cuisson d'un gypse.

La pâte durcit rapidement par hydratation du plâtre. Ensuite, les plaques sont chauffées dans des séchoirs afin d'éliminer l'excès d'eau.

L'allègement des plaques de plâtre, outre leur résistance mécanique, constitue un enjeu capital. Afin d'alléger la plaque de plâtre, il est courant d'introduire de l'air dans la pâte en ajoutant une mousse à la pâte de plâtre.

La réduction de la densité des plaques de plâtres est recherchée pour son double intérêt économique : D'une part, elle permet d'alléger le produit et de faciliter ainsi son transport, et d'autre part, elle permet de surmonter la limitation de la cadence de production par la diminution de la demande en plâtre. En effet, la calcination du gypse exige du temps et il est possible que cette étape soit un élément limitant la vitesse de la ligne de production. La diminution de la demande en plâtre permet en outre de réduire les coûts de production liés à la cuisson. Ainsi, la réduction de la densité des plaques de plâtre permet de diminuer les coûts de transport, d'augmenter la vitesse de ligne et en même temps de diminuer les coûts de production.

Différentes compositions de tensioactifs pour alléger les plaques de plâtre sont connues. Souvent, ces compositions contiennent des alkyléthersulfates.

Ainsi est décrite une composition de tensioactifs à base d'alkylsulfates et d'alkyléthersulfates dans WO9516515. Dans cette composition, le ratio entre alkylsulfates et alkyldi- ou triéthersulfates est d'au moins 12 : 1, de préférence entre 30 :1 et 60 :1. Les alkylsulfates seuls sont indésirables. En effet, une plaque de plâtre obtenue avec un alkylsulfate seul présente un allègement très médiocre.

Le document US 5,643,510 décrit l'utilisation d'un mélange d'alkylsulfates et d'alkyléthersulfates afin de contrôler la taille des bulles d'air dans les plaques de plâtre. Le document indique que les alkylsulfates, formant des mousses instables, ne sont pas utilisés seuls car l'obtention d'une plaque d'une densité donnée nécessiterait une consommation environ 3 fois supérieure à celle d'un tensioactif comprenant un alkyléthersulfate. Le tensioactif préférentiel est donc un mélange contenant environ 10% d'alkyléthersulfate.

Cependant, l'utilisation d'alkylsulfates au lieu d'un alkyléthersulfate comme tensioactif présente certains avantages. En effet, alors que l'alkylsulfate peut être obtenu par sulfatation directe de l'alcool gras correspondant, il faut passer par une étape d'éthoxylation pour obtenir l'alkyléthersulfate. Cette étape est non seulement coûteuse mais peut conduire en outre à la formation de produits secondaires indésirables.

Le problème que se propose de résoudre l'invention consiste alors à proposer un procédé de fabrication de plaques de plâtre allégées peu coûteux utilisant un tensioactif qui soit peu onéreux et facilement disponible.

En règle générale, la qualité d'un tensioactif est évaluée par rapport au volume de mousse qu'il permet d'obtenir. En effet, pour l'obtention d'un volume donné de mousse, il paraît logique que l'on consommera davantage d'un tensioactif à faible pouvoir moussant. Cela a des incidences économiques sur le prix de revient de la plaque de plâtre.

Cependant, la stabilité de la mousse avant son introduction dans la pâte de plâtre puis dans celle-ci constitue également un facteur non négligeable. Ainsi, à volume égal, une mousse peu stable conduira à une plaque de plâtre moins allégée qu'une mousse stable. Selon US 5,643,510, les alkylsulfates forment des mousses peu stables dans la pâte de plâtre.

Il est par ailleurs clair que la plaque de plâtre doit, même allégée, présenter par ailleurs des caractéristiques comparables aux plaques non allégées, tel qu'au niveau de la résistance mécanique. La qualité de la liaison entre la pâte de plâtre et les faces de la plaque, en ambiance sèche comme humide, constitue également une exigence de qualité qu'il s'agit de satisfaire.

L'invention repose sur la constatation que si certaines compositions d'alkylsulfates, présentent en général une légère surconsommation par rapport aux mélanges avec des alkyléthersulfates, elles permettent l'obtention de plaques de plâtre présentant un allègement considérable. En vue d'un tel allègement, le surcoût économique éventuel est largement compensé. En effet, l'économie générée par l'allègement peut représenter jusqu'à 7 fois le surcoût lié à la consommation supplémentaire en tensioactif. Le bilan reste donc globalement très positif.

Les plaques de plâtre ainsi allégées présentent en outre des caractéristiques de résistance mécanique et de liaison avec les faces externes parfaitement acceptables.

Cet effet surprenant semble lié à une interaction entre le tensioactif, la mousse, et la pâte de plâtre.

En effet, si le pouvoir moussant de ces alkylsulfates est souvent moins élevé comparé aux tensioactifs habituels comprenant des alkyléthersulfates, il s'avère que certains d'entre eux permettent l'obtention de mousses compatibles avec la pâte de plâtre. Par ailleurs, contrairement à l'enseignement de l'art antérieur, il a été trouvé que la surconsommation est très modérée et peut même dans certains cas être nulle.

Il semble que cet effet est au moins partiellement dû à une très bonne compatibilité entre la pâte de plâtre et la mousse, fonction de leurs viscosités respectives. Plus particulièrement, il apparaît que la fluidité des deux phases peut être réglée de manière à ce que le mélange se fasse sans perte excessive de volume de mousse Ainsi, l'efficacité de la mousse générée par le tensioactif est améliorée.

Il semble donc que la consommation en tensioactif ainsi que sa capacité d'allégement ne soient pas uniquement fonction du pouvoir moussant de celui-ci mais également dépendant du jeu complexe des autres paramètres du procédé. Il a lieu de penser qu'en particulier les caractéristiques physico-chimiques de la pâte de plâtre, et notamment sa fluidité, ont une influence sur l'effet d'allègement obtenu.

L'invention a donc pour objet un procédé de fabrication de plaques de plâtre présentant une densité de coeur inférieure à 0,77, et comprenant les étapes de :
- formation d'une mousse à partir d'eau et d'un tensioactif consistant en au moins un alkylsulfate de formule H(CH₂)ₙOSO₃⁻M⁺, dans laquelle n est un nombre entre 6 et 16, M est un cation monovalent, et le nombre moyen d'atomes de carbone nₘ est de 9 à 10, et
- introduction de la mousse obtenue dans une pâte de plâtre,
caractérisé en ce que la quantité de tensioactif introduit n'excède pas 0,32g/l de pâte de plâtre.

On entend par « densité » le rapport de la masse d'un volume donné de pâte de plâtre à la masse de ce volume en eau. Par densité de coeur, on entend la densité de la plaque de plâtre à l'exclusion du matériau recouvrant les faces.

De préférence, la consommation en tensioactif est inférieure à 0,24g/l et en particulier inférieure à 0,16g/l de pâte de plâtre. En général, la consommation est supérieure à 0,05g/l de pâte de plâtre pour les plaques d'épaisseur 12,5 mm, et 0,02g/l pour les plaques d'épaisseur 6 mm.

La plaque de plâtre produite présente de préférence une résistance à la compression supérieure à 2 MPa, et en particulier supérieure à 3 MPa.

Selon un mode de réalisation préféré, le tensioactif comprend 5 à 60% en poids de dodécylsulfate.

Selon un mode de réalisation préféré, le tensioactif comprend 40 à 95% en poids de décylsulfate. Selon un autre mode de réalisation préféré, le tensioactif comprend 5 à 60 % en poids d'octylsulfate. Le tensioactif particulièrement préféré comprend 5 à 15% en poids d'octylsulfate de sodium et 85 à 95% en poids de décylsulfate de sodium.

Le tensioactif particulièrement préféré présente un nombre de carbones moyen entre 9,5 et 10, de préférence de 9,7 à 9,9.

De préférence, M est choisi parmi le sodium, le potassium, et l'ammonium.

Selon un mode de réalisation, le tensioactif comprend en outre un séquestrant et/ou un hydrotrope.

L'invention porte également sur l'utilisation d'un tensioactif pour alléger les plaques de plâtre, consistant en au moins un alkylsulfate de formule H(CH₂)ₙOSO₃⁻M⁺, dans laquelle n est un nombre entre 6 et 16, M est un cation monovalent, et le nombre moyen d'atomes de carbone nₘ est de 9 à 10, la quantité utilisée étant inférieure à 0,32g/l de pâte de plâtre.

De préférence, ledit tensioactif est utilisé pour l'obtention de plaques de plâtre présentant une densité de coeur inférieure à 0,77, en particulier inférieure à 0,74 et tout particulièrement inférieure à 0,72. La densité du coeur est cependant généralement supérieure à 0,48.

D'autres caractéristiques et avantages de l'invention vont maintenant être décrits en détail dans l'exposé qui suit.

La composition de plâtre comprend du plâtre, de l'eau et une composition de tensioactifs. Elle peut par ailleurs contenir d'autres additifs tels qu'utilisés habituellement.

De plus, la mousse formée par la composition de tensioactifs visée permet d'obtenir des allègements comparables pour des plaques de plâtre réalisées avec différents types de gypse. Ainsi, la composition de tensioactifs est avantageuse en ce qu'elle est peu sensible à la qualité de gypse mise en oeuvre.

Par ailleurs, les caractéristiques de la mousse formée par la composition de tensioactifs sont peu sensibles à la température. Ainsi, lorsque la température de l'eau varie, le volume de mousse généré reste sensiblement constant.

En outre, il s'est avéré que la qualité de liaison entre le plâtre et la feuille externe des plaques de plâtre est remarquable.

Les caractéristiques mécaniques des plaques de plâtre sont habituellement évaluées par la résistance en flexion du coeur, la dureté du coeur, la dureté à la bille et la résistance en compression de la plaque de plâtre. D'une grande importance pratique est également la résistance qu'oppose la plaque de plâtre à l'enfoncement d'une tête de clou de ¼ de pouce, ce qu'il est convenu d'appeler le « nail pull test » ou résistance au poinçonnement. Les conditions de ce test sont décrites dans la norme ASTM C473-méthode B.

Par ailleurs, il s'avère que les plaques de plâtre obtenues montrent une bonne liaison entre le plâtre et la feuille externe.

Une composition de tensioactifs appropriée pour la mise en oeuvre du procédé est par exemple un mélange d'alkylsulfates en C₈ et C₁₀ telle que le Emal A10 DE commercialisé par KAO CORPORATION SA. Il est cependant également possible de procéder à un mélange à partir d'autres alkylsulfates ou de mélanges d'alkylsulfates pour aboutir à une composition ayant un nombre de carbone moyen de 9 à 10.

Les alkylsulfates répondant à la formule H(CH₂)ₙ-OSO₃M sont en général obtenus par sulfatation des alcools correspondants. En principe, n est le plus souvent un nombre pair en raison de la meilleure disponibilité de ces alcools. Cependant, les alkylsulfates avec n impair peuvent également être utilisés dans le cadre de l'invention.

De préférence, la chaîne des alkylsulfates entrant dans la composition comprend de 8 à 12 atomes de carbone.

La composition de tensioactifs peut en outre renfermer un hydrotrope. De tels hydrotropes sont par exemple le méthanol, éthanol, isopropanol, éthylène glycol, propylène glycol, polyéthylène glycol et polypropylène glycol ainsi que des monoalkyléthers d'éthylène glycol, les alkyl polyglycosides et leurs mélanges.

Avantageusement, la composition peut comprendre un agent séquestrant ou chélatant, qui permet de maintenir en solution les ions de magnésium ou de calcium en particulier dans l'eau dure. De tels agents séquestrants ou chélatants sont par exemple les acides hydroxycarboxyliques et leurs sels, les aldoses et cétoses, les complexants minéraux, plus particulièrement les phosphates, les borates et les polyphosphates, les complexants organiques choisis plus particulièrement dans le groupe comprenant l'EDTA, Le NTA etc. et les dérivés de l'acide phosphorique de structure polymère qui contiennent des groupes hydroxy et/ou amine et/ou carboxylates.

La mousse obtenue permet d'introduire dans la plaque de plâtre de 0,01 à 0,04% en poids de tensioactif (exprimé en sec) par rapport au poids de la plaque. Elle représente un volume compris entre 20 et 40% de celui de la plaque de plâtre.

La pâte de plâtre moussée peut avantageusement contenir par ailleurs des adjuvants utilisés habituellement tels que des fluidifiants, accélérateurs, amidon etc.

L'invention sera mieux comprise au regard des exemples qui suivent, qui sont donnés à titre illustratif et non limitatif.

### EXEMPLES

### Exemple 1

On prépare des miniplaques de 0,1m² ayant une épaisseur de 12,5 mm à partir de plâtre de St. Loubès, qui est un plâtre obtenu par cuisson flash d'un gypse naturel ayant les caractéristiques suivantes :
- teneur en gypse : 68,8%
- anhydrite : 0,90%
- magnésie : 3,70%
- dolomite :8,80%
- talc :0,80%
- phlogopite :1,10%
- microline :3,80%
- quartz : 9,50%
- celestine : 0,60%
- clinochlore :2,00%.

Ces plaques sont préparées de la manière suivante : On prépare une mousse par agitation pendant 1 minute dans un générateur de mousse du type Hamilton Beach réglé à une tension de 55 Volts d'un mélange de 5.25 ml d'une solution à 50g/l d'une composition constituée par des alkylsulfates de sodium contenant 47% en poids en C₈ et 53% en poids en C₁₀, le nombre moyen de carbone nₘ, en tenant compte des masses molaires des constituants, étant de 9 avec 170 ml d'eau à 22°C. La mousse est ensuite introduite dans un mélange de 700g d'eau à une température de 50°C et de 1130g de plâtre à une température de 22°C. La pâte de plâtre est déposée entre deux feuilles de carton. L'excédent après remplissage est éliminé. La miniplaque est ensuite séchée dans une étuve à une température croissant régulièrement de 100°C à 200°C en 15 min, puis décroissant régulièrement de 200°C à 90°C en 25 min.

### Exemple 2

Des plaques de plâtre sont fabriquées selon l'exemple 1, mais en remplaçant la composition de tensioactifs par la même quantité d'un tensioactif contenant 25% en poids d'alkylsulfate en C₈ et 75% en poids d' alkylsulfate en C₁₀. Le nombre moyen d'atomes de carbone nₘ dans la composition est de 9,5.

### Exemple 3

Des plaques de plâtre sont fabriquées selon l'exemple 1, mais en remplaçant la composition de tensioactifs par la même quantité d'un tensioactif contenant 11% en poids d'alkylsulfate en C₈ et 89% en poids d' alkylsulfate en C₁₀. Le nombre moyen d'atomes de carbone nₘ dans la composition est de 9,8.

### Exemple 4

Des plaques de plâtre sont fabriquées selon l'exemple 1, mais en remplaçant la composition de tensioactifs par la même quantité d'un tensioactif contenant 33,3% en poids d' alkylsulfate en C₈, 58,4% en poids d'alkylsulfate en C₁₀ et 8,3% en poids d'alkylsulfate en C₁₂. Le nombre moyen d'atomes de carbone nₘ dans la composition est de 9,5.

### Exemple 5

Des plaques de plâtre sont fabriquées selon l'exemple 1, mais en remplaçant la composition de tensioactifs par la même quantité d'un tensioactif contenant 75% en poids d'alkylsulfate en C8 et 25% en poids d'alkylsulfate en C10. Le nombre moyen d'atomes de carbone nₘ dans la composition est de 8,5.

### Exemple 6

Des plaques de plâtre sont fabriquées selon l'exemple 1, mais en remplaçant la composition de tensioactifs par la même quantité d'un tensioactif contenant un alkylsulfate (AS) et un alkyléthersulfate (AES). Ce tensioactif est vendu par la société STEPAN sous la dénomination Alphafoamer.

Les plaques réalisées selon les exemples, une fois séchées à poids constant en accord avec la norme française NF P 72-302, sont pesées et on détermine leurs densités de coeur. Les résultats sont consignés dans le tableau 1 ci-dessous.

**Tableau 1**

| Exemple | nₘ | Volume de mousse [ml] | Densité de la plaque |
|---|---|---|---|
| 1 | 9,0 | 688 | 0,728 |
| 2 | 9,5 | 688 | 0,712 |
| 3 | 9,8 | 695 | 0,692 |
| 4 | 9,5 | 700 | 0,698 |
| 5* | 8,5 | 680 | 0,771 |
| 6* | AS+AES | 750 | 0,700 |

| | | | |
|---|---|---|---|
| * Exemples de comparaison | | | |

Les compositions selon l'invention permettent sans surconsommation excessive par rapport aux mélanges d'alkylsulfates et d'alkyléthersulfates d'obtenir des allègements comparables. L'exemple 3 illustre une composition de tensioactifs utilisée de façon préférentielle.

Pour évaluer les propriétés mécaniques des plaques, on mesure la résistance à la compression à partir d'un échantillon de 5x5 cm² prélevé sur la plaque. La dureté bille et la charge à rupture du coeur (essai de flexion à trois points) sont mesurées selon la norme NF P 72-302.

La dureté du coeur et la résistance au poinçonnement (nail pull test) sont mesurés selon la norme ASTM C473 méthode B.

Les résultats obtenus mettent en évidence qu'avec une composition de tensioactifs selon l'art antérieur (exemple 6), lorsque l'on a une densité de coeur équivalente, les performances mécaniques obtenues sont inférieures à celles que l'on atteint grâce au procédé selon l'invention.

Les performances obtenues avec la composition selon l'exemple 5 correspondent à des plaques ayant une densité de coeur plus élevée.

Ainsi, à performance mécanique suffisante, la réalisation préférentielle correspond à celle qui conduit à l'allègement maximum. Les résultats de ces mesures sont consignés dans le tableau 2 ci-dessous.

**Tableau 2**

| Exemple | Quantité Tensioactif Utilisée Bille (g/l) | Contrainte en compression [MPa] | Dureté bille [mm] | Dureté coeur [DaN] | Nail pull [DaN] |
|---|---|---|---|---|---|
| 1 | 0,139 | 3.72 | 18,70 | 9,60 | 37 |
| 2 | 0,139 | 3,63 | 19,90 | 11,40 | 38 |
| 3 | 0,136 | 3,46 | 18,65 | 9,55 | 34,8 |
| 4 | 0,138 | 3,52 | 18,78 | 10,25 | 35,9 |
| 5* | 0,152 | 4,52 | 17,30 | 14,00 | 42 |
| 6* | 0,134 | 2,59 | 19,8 | 7,6 | 32,6 |

| | | | | | |
|---|---|---|---|---|---|
| * exemples de comparaison | | | | | |

Par ailleurs, les plaques de plâtre préparées ont été caractérisées par la mesure de la liaison entre le carton et le coeur. La mesure consiste à arracher le carton et à évaluer le pourcentage de décollement du carton du coeur. Le test de liaison sèche est fait sur une plaque sèche. Le test de liaison humide après 2 heures est fait après réhumidification pendant 2 heures à 30°C en atmosphère contrôlée à 90% d'humidité. Les résultats sont portés dans le tableau 3 ci-dessous.

**Tableau 3**

| Exemple | Liaison sèche (% décollement) | Liaison humide après 2 heures (% décollement) |
|---|---|---|
| 1 | 0 | 6 |
| 2 | 0 | 4 |
| 3 | 0 | 4 |
| 4 | 0 | 5 |
| 5* | 0 | 7 |
| 6* | 3 | 30 |

| | | |
|---|---|---|
| *exemples de comparaison | | |

Les résultats mettent en évidence la supériorité des compositions selon l'invention au niveau de la liaison tant sèche qu'humide après 2 heures, notamment vis-à-vis de tensioactifs contenant des alkyléthersulfates.

## Revendications

1. Procédé de fabrication de plaques de plâtre présentant une densité de coeur inférieure à 0,77 comprenant les étapes de :
- formation d'une mousse à partir d'eau et d'un tensioactif consistant en au moins un alkylsulfate de formule H(CH₂)ₙOSO₃⁻M⁺, dans laquelle n est un nombre entre 6 et 16, M est un cation monovalent, et le nombre moyen d'atomes de carbone nₘ est de 9 à 10 ; et
- introduction de la mousse obtenue dans une pâte de plâtre,
**caractérisé en ce que** la quantité de tensioactif introduit n'excède pas 0,32g/litre de pâte de plâtre.

2. Procédé selon la revendication 1, dans lequel la consommation en tensioactif est inférieure à 0,24 g/l de pâte de plâtre.

3. Procédé selon l'une des revendications précédentes, dans lequel la plaque de plâtre produite présente une résistance à la compression supérieure à 2 MPa.

4. Procédé selon l'une des revendications précédentes, dans lequel le tensioactif comprend 5 à 60% en poids de dodécylsulfate.

5. Procédé selon l'une des revendications précédentes, dans lequel le tensioactif comprend 40 à 95% en poids de décylsulfate.

6. Procédé selon l'une des revendications précédentes, dans lequel le tensioactif comprend 5 à 60 % en poids d'octylsulfate.

7. Procédé selon l'une des revendications précédentes, dans lequel M est choisi parmi le sodium, le potassium, et l'ammonium.

8. Procédé selon l'une des revendications précédentes, dans lequel le tensioactif comprend 5 à 25% en poids d'octylsulfate de sodium et 75 à 95% en poids de décylsulfate de sodium.

9. Procédé selon l'une des revendications précédentes, dans lequel le tensioactif comprend 5 à 15% en poids d'octylsulfate de sodium et 85 à 95% en poids de décylsulfate de sodium.

10. Procédé selon l'une des revendications précédentes, dans lequel le tensioactif comprend en outre un séquestrant.

11. Procédé selon l'une des revendications précédentes, dans lequel le tensioactif comprend en outre un hydrotrope.

12. Utilisation d'un tensioactif pour alléger les plaques de plâtre, consistant en au moins un alkylsulfate de formule H(CH₂)ₙOSO₃⁻M⁺, dans laquelle n est un nombre entre 6 et 16, M est un cation monovalent, et le nombre moyen d'atomes de carbone nₘ est de 9 à 10, la quantité utilisée étant inférieure à 0,32g/l de pâte de plâtre.

13. Utilisation selon la revendication précédente, dans laquelle la plaque de plâtre présente une densité de coeur inférieure à 0,77.

## Claims

1. Process for the manufacture of plasterboards exhibiting a core density of less than 0.77 comprising the stages of:
- formation of a foam from water and a surfactant composed of at least one alkyl sulphate of formula H(CH₂)ₙOSO₃⁻M⁺, in which n is a number between 6 and 16, M is a monovalent cation and the mean number of carbon atoms nₘ is from 9 to 10, and
- introduction of the foam obtained into a plaster slurry,
**characterized in that** the amount of surfactant introduced does not exceed 0.32 g/litre of plaster slurry.

2. Process according to Claim 1, in which the consumption of surfactant is less than 0.24 g/l of plaster slurry.

3. Process according to either of the preceding claims, in which the plasterboard produced exhibits a compressive strength of greater than 2 MPa.

4. Process according to one of the preceding claims, in which the surfactant comprises 5 to 60% by weight of dodecyl sulphate.

5. Process according to one of the preceding claims, in which the surfactant comprises 40 to 95% by weight of decyl sulphate.

6. Process according to one of the preceding claims, in which the surfactant comprises 5 to 60% by weight of octyl sulphate.

7. Process according to one of the preceding claims, in which M is chosen from sodium, potassium, and ammonium.

8. Process according to one of the preceding claims, in which the surfactant comprises 5 to 25% by weight of sodium octyl sulphate and 75 to 95% by weight of sodium decyl sulphate.

9. Process according to one of the preceding claims, in which the surfactant comprises 5 to 15% by weight of sodium octyl sulphate and 85 to 95% by weight of sodium decyl sulphate.

10. Process according to one of the preceding claims, in which the surfactant additionally comprises a sequestering agent.

11. Process according to one of the preceding claims, in which the surfactant additionally comprises a hydrotropic agent.

12. Use of a surfactant for lightening plasterboards composed of at least one alkyl sulphate of formula H(CH₂)ₙOSO₃⁻M⁺, in which n is a number between 6 and 16, M is a monovalent cation and the mean number of carbon atoms nₘ is from 9 to 10, the amount used being less than 0.32 g/l of plaster slurry.

13. Use according to the preceding claim, in which the plasterboard exhibits a core density of less than 0.77.

## Patentansprüche

1. Verfahren zur Herstellung von Gipsplatten, die eine Kerndichte unterhalb 0,77 besitzen, folgende Schritte aufweisend:
- Bilden eines Schaums ausgehend von Wasser und einem Tensid, bestehend aus mindestens einem Alkylsulfat der Formal H(CH₂)ₙOSO₃⁻M⁺, in der n eine Zahl zwischen 6 und 16 ist, M ein einwertiges Kation ist und die mittlere Anzahl an Kohlenstoffatomen nₘ von 9 bis 10 beträgt; und
- Einbringen des erhaltenen Schaums in eine Gipsmasse,
**dadurch gekennzeichnet, dass** die Menge an eingebrachtem Tensid 0,32 g/l Gipsmasse nicht überschreitet.

2. Verfahren nach Anspruch 1, bei dem der Verbrauch an Tensid unterhalb 0,24 g/l Gipsmasse liegt.

3. Verfahren nach einem der vorhergehenden Ansprüche, bei dem die erzeugte Gipsplatte eine Druckfestigkeit besitzt, die 2 MPa überschreitet.

4. Verfahren nach einem der vorhergehenden Ansprüche, bei dem das Tensid 5 bis 60 Gew% Dodecylsulfat aufweist.

5. Verfahren nach einem der vorhergehenden Ansprüche, bei dem das Tensid 40 bis 95 Gew% Decylsulfat aufweist.

6. Verfahren nach einem der vorhergehenden Ansprüche, bei dem das Tensid 5 bis 60 Gew% Octylsulfat aufweist.

7. Verfahren nach einem der vorhergehenden Ansprüche, bei dem M ausgewählt wird aus Natrium, Kalium und Ammonium.

8. Verfahren nach einem der vorhergehenden Ansprüche, bei dem das Tensid 5 bis 25 Gew% Natrium-octylsulfat und 75 bis 95 Gew% Natrium-decylsulfat aufweist.

9. Verfahren nach einem der vorhergehenden Ansprüche, bei dem das Tensid 5 bis 15 Gew% Natrium-octylsulfat und 85 bis 95 Gew% Natrium-decylsulfat aufweist.

10. Verfahren nach einem der vorhergehenden Ansprüche, bei dem das Tensid außerdem ein Maskierungsmittel aufweist.

11. Verfahren nach einem der vorhergehenden Ansprüche, bei dem das Tensid außerdem ein Hydrotrop aufweist.

12. Verwendung eines Tensids zum Leichtermachen von Gipsplatten, das aus mindestens einem Alkylsulfat der Formel H(CH₂)ₙOSO₃⁻M⁺, in der n eine Zahl zwischen 6 und 16 ist, M ein einwertiges Kation ist und die mittlere Anzahl an Kohlenstoffatomen nₘ von 9 bis 10 beträgt, besteht, wobei die verwendete Menge geringer als 0,32 g/l Gipsmasse ist.

13. Verwendung nach dem vorhergehenden Anspruch, bei der die Gipsplatte eine Kerndichte besitzt, die geringer als 0,77 ist.
